# EUROPÄISCHE PATENTSCHRIFT

(11) **EP 3 017 668 B1**
(45) Veröffentlichungstag und Bekanntmachung des Hinweises auf die Patenterteilung: **19.04.2017**
(21) Anmeldenummer: 15197683.4
(22) Anmeldetag: 27.06.2013
(51) Int. Cl.: A01B 15/02, A01B 3/46, A01B 15/08

(54) **PFLUG, INSBESONDERE DREHPFLUG**
PLOUGH, IN PARTICULAR TURN-OVER PLOUGH
CHARRUE, EN PARTICULIER CHARRUE RÉVERSIBLE

(30) Priorität: 18.07.2012 DE 102012106459
(43) Veröffentlichungstag der Anmeldung: 11.05.2016
(62) Teilanmeldung aus: 13401062.8
(73) Patentinhaber: Amazonen-Werke H. Dreyer GmbH & Co. KG, 49205 Hasbergen (DE)
(72) Erfinder: LAUMANN, Bernhard, 48477 Hörstel-Riesenbeck (DE); RESCH, Rainer, 49170 Hagen a TW (DE); WITHAKE, Gustav, 48496 Hopsten (DE)

(56) Entgegenhaltungen:
- DE-C3- 2 746 527
- DE-U- 1 913 507
- US-A- 2 101 661

## Beschreibung

Die Erfindung bezieht sich auf einen Pflug, insbesondere einen Drehpflug mit einem an einem Anbaubock zur Verbindung des Pfluges mit einem landwirtschaftlichen Schlepper befestigbaren, vorzugsweise über ein Stützrad auf dem Erdboden abstützbaren Pflugrahmen mit zumindest einer an dem Pflugrahmen angeordneten Pflugscharreihe, die jeweils Pflugkörper mit einer Pflugschar und einem Streichblech aufweist, mit welchem ein Furchenbalken des zu bearbeitenden Erntebodens einem dynamischen Wendevorgang zu unterziehen ist, und mit einem sich in Arbeitsrichtung des Pfluges hinter der Pflugschar angeordneten, sich in Richtung einer Furchensohle des zu bearbeitenden Erntebodens hin erstreckenden Leitorgan.

Ein Pflug der vorgenannten Art ist aus dem DE 19 13 507 U bekannt. Die dortigen im Querschnitt im Wesentlichen schaufelförmig gestalteten und mit einer kurvenförmigen Kontur gegen die Arbeitsrichtung weisend ausgebildeten Streichbleche dienen insbesondere dazu, den auszuschneidenden Furchenbalken des zu bearbeitenden Erntebodens einem dynamischen Wendevorgang zu unterziehen, um eine Furche auszuräumen und den Furchenbalken neben der Furche abzulegen.

Dieser Pflug hat ein mit Abstand hinter der Pflugschar angeordnetes Leitorgan, das über Schrauben an dem Streichblech in Langlöchern zwecks relativer Lageverstellung an dem Streichblech zu befestigen ist. Das vorgesehene Leitorgan erstreckt sich bis zur Furchensohle. Dadurch soll ein Zurückfallen von einzelnen Krümeln des aufgeworfenen Furchenbalkens unter das Streichblech verhindert werden. Aufgrund der Tiefenerstreckung und der relativen Größe dieses Leitorgans wird jedoch der Zugkraftbedarf des Pfluges beim Pflügen erheblich erhöht. Ein solcher Zugkraftbedarf steht beim Pflügen einem wirtschaftlichen Pflugbetrieb entgegen.

Aus der DE 27 46 527 C3 ist ein Pflugkörper bekannt, bei dem an dem Streichblech in Richtung zum ungepflügten Erdboden hin eine Verlängerung in Gestalt eines Verlängerungsbleches vorgesehen ist, dessen vordere Begrenzung mit der Furchensohle einen rechten Winkel bildet. Die untere Begrenzung soll parallel zur Furchensohle, aber in geringerer Tiefe als diese verlaufen, womit erreicht werden soll, dass die von der Verlängerung erzeugte Furchensohle beim nächsten Durchgang des Pfluges als Lauffläche für die furchenseitigen Räder eines Schleppers dienen kann. Damit ist jedoch die Überführung von Krümeln des zu bearbeitenden Erdbodens aus einer zu erstellenden Furchensohle nicht möglich.

Es ist Aufgabe der vorliegenden Erfindung, einen Pflug der eingangs genannten Art dahingehend zu verbessern, dass eine relativ breite, möglichst krümelfreie breite Furche mit einem Pflugkörper des Pfluges zu erstellen ist, ohne dass der Zugkraftbedarf wesentlich erhöht ist.

Zur Lösung dieser Aufgabe zeichnet sich der Pflug der eingangs genannten Art dadurch aus, dass der Konturverlauf des Leitorgans in seiner Ausrichtung zur Furchensohle des zu bearbeitenden Erdreiches hin die obere Kante der Pflugschar eines Pflugkörpers um vorzugsweise nicht mehr als Dreiviertel der Höhe, vorzugsweise die halbe Höhe der Pflugschar nach unten überragt und einen Bereich des Leitbleches entgegen der Arbeitsrichtung des Pfluges hinter der Pflugschar und zur Furchensohle des zu bearbeitenden Bodens hin fortsetzt, in welchem ein dynamischer Wendevorgang des Furchenbalkens des zu bearbeitenden Erdreiches erfolgt.

Damit ist ein Pflug geschaffen, bei dem mit nur einem unwesentlichen höheren Zugkraftbedarf eine breite und annähernd krümelfreie Furche zu erstellen ist. Der untere Bereich des Leitorgans, vorzugsweise des Leitbleches, also der Bereich, der der Furchensohle des zu bearbeitenden Erdreiches zugewandt ist, hat zu dieser Furchensohle einen nicht unbeträchtlichen Abstand. Diese Unterkante des Seitenbleches ragt vorzugsweise nicht mehr als dreiviertel der Höhe, vorzugsweise die halbe Höhe der Pflugschar über die obere Kante der Pflugschar hinaus und befindet sich im Wesentlichen noch in dem Bereich, in dem der Furchenbalken des zu bearbeitenden Erdbodens sich in Wendung befindet. Damit unterstützt das Leitorgan die Wendung dieses Furchenbalkens wesentlich in dessen unterem Bereich. Damit ist eine ausreichend große und im Wesentlichen saubere Furchensohlenbreite zu erreichen, indem auch etwaige Krümel des zu bearbeitenden Erdbodens, die durch das herkömmliche Streichblech entstehen können, zusätzlich innerhalb der Furche freigeräumt werden und mit dem Furchenbalken zur Seite in den bereits gepflügten Bereich geschoben werden können.

Das Leitorgan ist in einem Bereich des Streichbleches angeordnet, in welchem noch der dynamische Wendevorgang des Furchenbalkens durch das Leitblech erfolgt. Damit wird dieser dynamische Wendevorgang des Furchenbalkens zur größeren Furchenräumung energiegünstig und damit wirtschaftlich ausgenutzt, wodurch sich der nur unwesentlich höhere Zugkraftbedarf des Pfluges ergibt, obgleich eine saubere breite Furche zu erstellen ist.

Das Leitorgan schließt sich, ausgehend vom vorderen Bereich des Streichbleches bzw. ausgehend von der in Arbeitsrichtung gelegenen vorderen Pflugschar, stufenlos und somit annähernd stetig an die entsprechende untere Kante des Streichbleches, d.h. die untere Kante, die der Furchensohle zugewandt ist. Dabei kann sich das Leitorgan unmittelbar an die Pflugschar anschließen. Alternativ ist es jedoch auch möglich, dass das Leitorgan einen rückversetzten Lageabstand, d.h. also einen Abstand gegen die Arbeitsrichtung, zur vorgeordneten Pflugschar aufweist.

Wenn sich das Leitorgan unmittelbar an die Pflugschar anschließt, kann es so angeordnet sein, dass es die Trennlinie zwischen Pflugschar und dem oberhalb der Pflugschar angeordneten Bereich des Streichbleches im Wesentlichen unmittelbar fortsetzt und dann mit einem beispielsweise gekrümmten bzw. gebogenen Verlauf des Streichbleches wieder annähernd stufenlos bzw. stetig in die untere Kante des Streichbleches übergeht.

Das Leitorgan, also vorzugsweise das Leitblech, kann über geeignete Verbindungen auswechselbar mit dem Streichblech verbunden werden, so dass je nach Anforderung auch von der Kontur und von der Größe her unterschiedliche Leitorgane für verschiedene Anwendungszwecke an dem Streichblech vorgesehen werden können. Auch im Reparaturfall lassen sich solche Leitorgane einfach tauschen. Für viele Anwendungszwecke reicht es völlig aus, wenn der letzte Pflugkörper, bezogen auf die Zugrichtung bzw. Arbeitsrichtung des Pfluges, ein Streichblech aufweist, der mit dem entsprechenden Leitorgan versehen ist. Somit ist die letzte Furche nach einer Pflugfahrt breit und krümelfrei zu erstellen, wobei auch noch zusätzliche Bleche vorgesehen sein können, um die Furchenwand in senkrechter Ausrichtung sauber zu bearbeiten.

Der Pflug ist bevorzugtermaßen als Drehpflug ausgebildet mit zwei Pflugscharreihen, die von einem Zylinder zu drehen sind, wobei in jeder Reihe zumindest das letzte Streichblech eines Pflugkörpers mit dem Leitorgan zu versehen ist.

Die untere Kante des Leitorgans weist zumindest in dessen hinterer Hälfte einen stetig nach hinten und oben ansteigenden Verlauf auf.

Zusammenfassend wird durch das erfindungsgemäß ausgestaltete Leitorgan, welches das herkömmlich ausgestaltete Streichblech ergänzt und/oder erweitert, im Vergleich zu herkömmlichen Streichblechen eine vergrößerte und saubere Furchenräumung mit einem vergrößerten Furchenquerschnitt erreicht. Selbst Schlepperreifen mit einer Breite von 650mm bzw. 710mm walzen so nur noch einen geringen Bodenbereich des gepflügten Bodens wieder fest. Es ist so ein sauberer und guter Bodenschluss der Pflugfurche erreicht. Somit fehlt in der Pflugfurche kein lockerer Boden, der sonst beim Pflügen mit herkömmlich ausgestalteten Streichblechen durch die Schlepperreifen festgewalzt würde. Der in der Pflugfurche liegen bleibende Boden wird durch das das Streichblech nach unten und hinten ergänzende Leitorgan quer zur Furchensohle in Richtung des gepflügten Bodens zusätzlich verschoben. So werden diese sonst in der Furche verbleibenden Bodenkrumen nicht vom Schlepperreifen festgewalzt.

Zu weiteren Ausgestaltungen der Erfindung wird auf weitere Unteransprüche, die nachfolgende Beschreibung und die Zeichnung verwiesen. In der Zeichnung zeigen:
- Fig. 1: eine Seitenansicht auf ein Ausführungsbeispiel eines als Drehpflug ausgebildeten Pfluges nach der Erfindung;
- Fig. 2 bis 9: jeweils verschiedene Ausführungsbeispiele eines Pflugkörpers mit jeweiligem Leitorgan, welche jeweils in den Figuren mit den geraden Nummern in einer jeweiligen Seitenansicht und in den Figuren mit den ungeraden Nummern in der Ansicht von vorn dargestellt sind;
- Fig. 10, 11 und 12: eine schematische Querschnittsdarstellung einer Furche vor der Bearbeitung durch das Leitorgan, die Darstellung, was von der Furche noch freizuräumen ist, und die Darstellung, wenn die Furche freigeräumt ist;
- Fig. 13 bis 15: zu Fig. 10 bis 12 analoge Darstellungen bei einer noch breiter auszuräumenden Furche;
- Fig. 16: eine Seitenansicht einer erfindungsgemäßen Ausgestaltung eines Pflugkörpers nach der Erfindung und
- Fig. 17: die Ansicht des Pflugkörpers nach Fig. 16 von vorn.

In der Zeichnung sind grundsätzlich gleichwirkende Teile mit übereinstimmenden Bezugsziffern versehen.

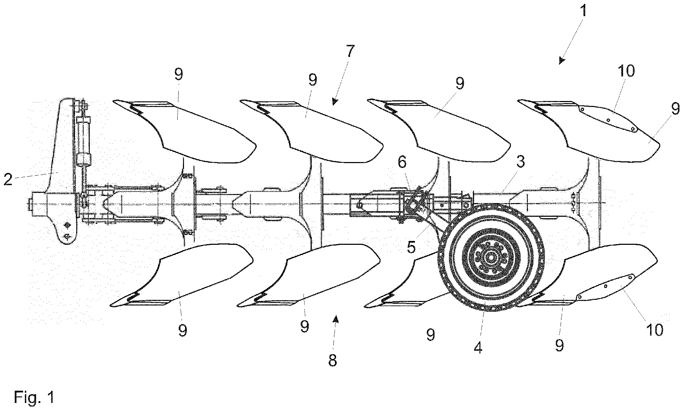

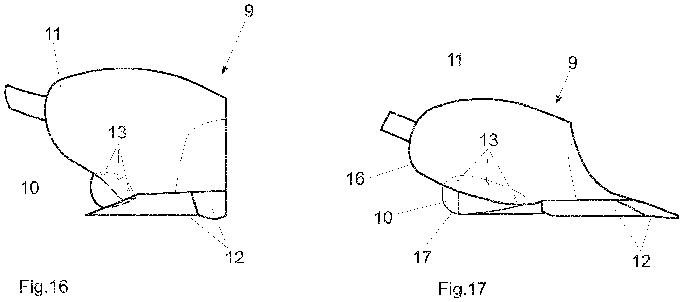

Die Darstellungen in Fig. 1 bis 15 zeigen keine erfindungsgemäße Ausgestaltung, sondern dienen zur grundsätzlichen Erläuterung. Die erfindungsgemäße Ausgestaltung ist in den Fig. 16 und 17 gezeigt.

In Fig. 1 ist ein allgemein mit 1 bezifferter Drehpflug gezeigt, der über einen Anbaubock 2 an einen im Einzelnen nicht näher gezeigten landwirtschaftlichen Schlepper anhängbar ist und der einen Pflugrahmen 3 aufweist, der über ein Stützrad 4 auf dem Erdboden abzustützen ist. Das Stützrad 4 ist über einen Radarm 5 an einem Pflugrahmenteil 6 verschwenkbar abgestützt.

Der Pflugrahmen 3 trägt allgemein mit 7 und 8 bezifferte Pflugscharreihen mit Pflugkörpern 9, wobei der jeweils in der Reihe letzte Pflugkörper 9, ausgehend von der Arbeitsrichtung des Pfluges bzw. vom Anbaubock 2 betrachtet, mit einem Leitorgan 10 versehen ist, worauf im Späteren noch im Einzelnen einzugehen sein wird.

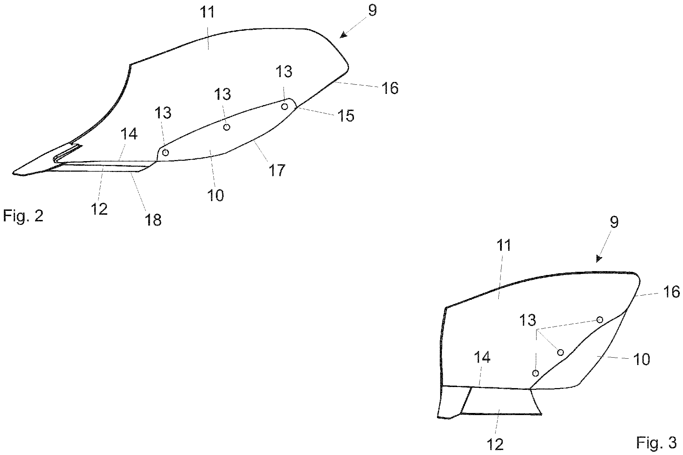

In den Darstellungen nach den Fig. 2 bis 9 und in den erfindungsgemäßen Ausführungsbeispielen nach den Fig. 16 und 17 sind die Pflugkörper 10 in alternativer Ausgestaltung jeweils in einer Seitenansicht dargestellt.

Diese Pflugkörper 9 haben jeweils ein Streichblech 11 sowie eine Pflugschar 12. Die jeweiligen Streichbleche 11 können eine übliche Streichblechgestaltung haben mit einer im Querschnitt im Wesentlichen schaufelförmigen und mithin leicht gewölbten oder kurvenförmigen Gestalt, die sich in ihrer Längsrichtung ebenfalls kurvenförmig oder schaufelförmig erstreckt, um einen dynamischen Wendevorgang für einen herauszuschälenden Furchenbalken des zu bearbeitenden Erdbodens durchführen zu können. Damit ist eine Furche zu erstellen, die zuvor von der Pflugschar geschnitten ist. Anstelle des Streichbleches können auch Streichblechstreifen, die mit Lageabstand zueinander angeordnet sind, als Streichblech vorgesehen sein, so dass der Begriff des Streichbleches diese Varianten erfasst.

In der Darstellung nach Fig. 2 erstreckt sich unmittelbar an die Pflugschar 12 anschließend das Leitorgan 10, das über Schrauben 13 mit dem Streichblech 11 verbunden ist. Dieses Leitorgan 10 hat hier eine Kontur dergestalt, dass sie die Trennlinie 14 zwischen Streichblech 11 und Pflugschar 12 unmittelbar fortsetzt. Danach hat es einen leicht gebogenen Verlauf, der im Wesentlichen einer Sichel ähnelt und das Streichblech 11 gegenüber ihrer normalen Kontur nur relativ geringfügig überragt, um dann stetig bei 15 wiederum in die untere Kante 16 des Streichbleches 11 überzugehen. Das Leitorgan 10 mit seiner unteren Kante 17 überragt jedoch die untere Kante 18 der Pflugschar nicht. In diesem Ausführungsbeispiel überragt die untere Kante 17 des Leitorgans auch nicht die untere Kante 16, die auch gleichfalls im vorderen Bereich die Trennlinie 14 zwischen Streichblech 11 und Pflugschar 12 ist.

Ähnliches gilt auch für der Darstellung nach Fig. 3, wo das Leitorgan 10 nach Art einer rückwärtigen Flosse sich an das Streichblech 11 anschließt, und zwar wieder unmittelbar an die Trennlinie 14 zwischen Streichblech 11 und Pflugschar 12, um dann wiederum stetig in die untere Kante 16 des Streichbleches überzugehen.

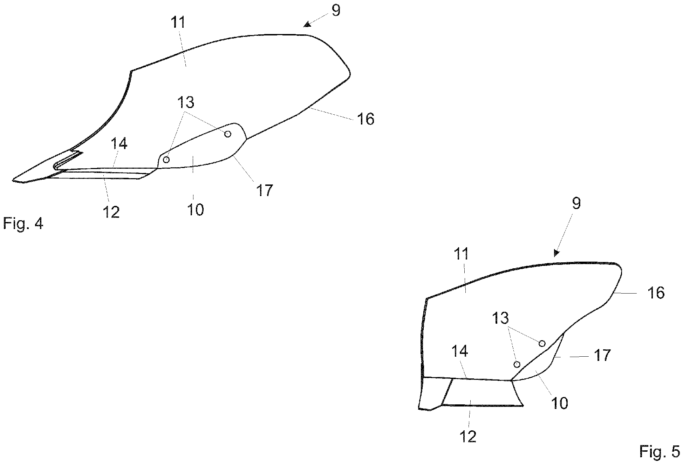

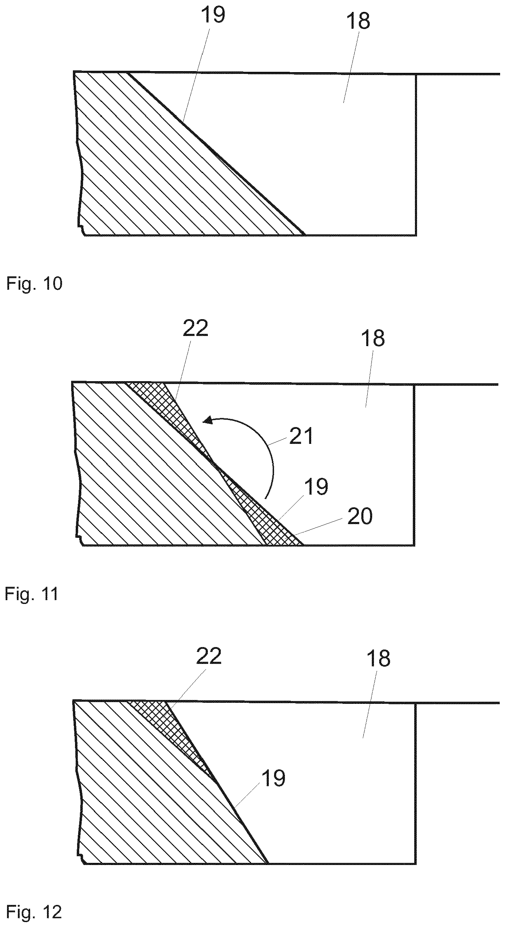

In der Darstellung nach Fig. 5 ist das Leitorgan 10 kürzer ausgebildet als in dem Ausführungsbeispiel nach Fig. 10, schließt sich allerdings auch wiederum unmittelbar an die Trennlinie 14 zwischen Streichblech 11 und Pflugschar an und geht wiederum ohne Stufe und mithin im Wesentlichen stetig in die untere Kante 16 des Streichbleches 11 mit ihrer unteren Kante 17 über.

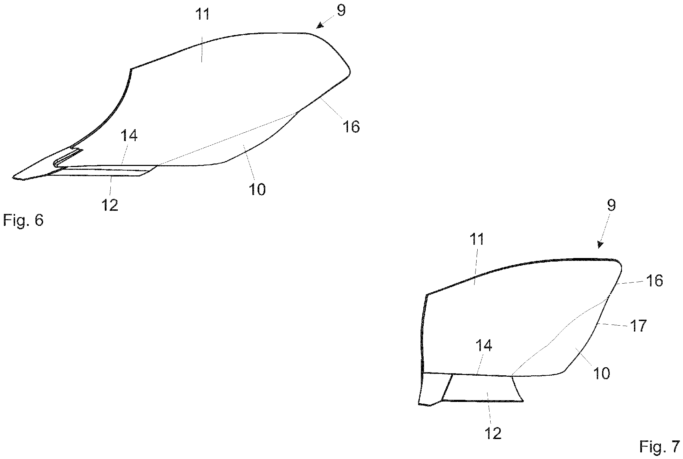

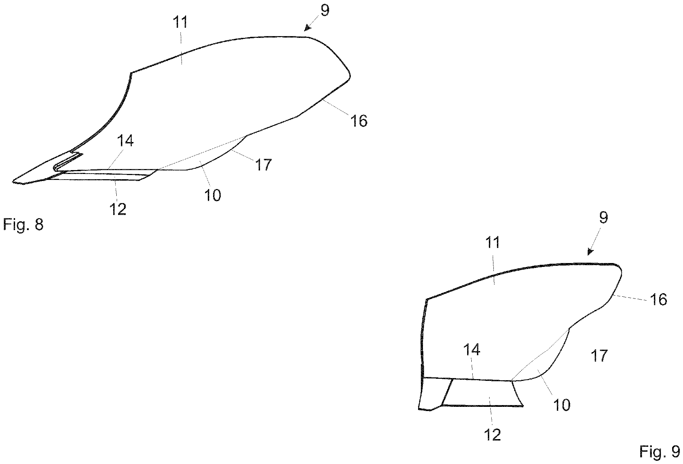

Ähnliche Verhältnisse sind auch bei den Darstellungen nach den Fig. 6 und 7 anzutreffen, wobei dort die Leitorgane 10 wiederum eine andere Kontur und damit Formgebung haben. Auch die Ausführungsbeispiele nach den Fig. 8 und 9 zeigen eine Anordnung und einen Verlauf des Leitorgans 10, der sich unmittelbar an die Trennlinie 14 zwischen Streichblech 11 und Pflugschar 12 anschließt, wobei hier unterschiedliche Krümmungen in der Formgebung mit der unteren Kante 17 dargestellt sind, die jedoch auch wiederum, und zwar mit unterschiedlichem Lageabstand zum rückwärtigen Bereich, in die Kontur des Streichbleches und in die untere Kante 16 übergehen.

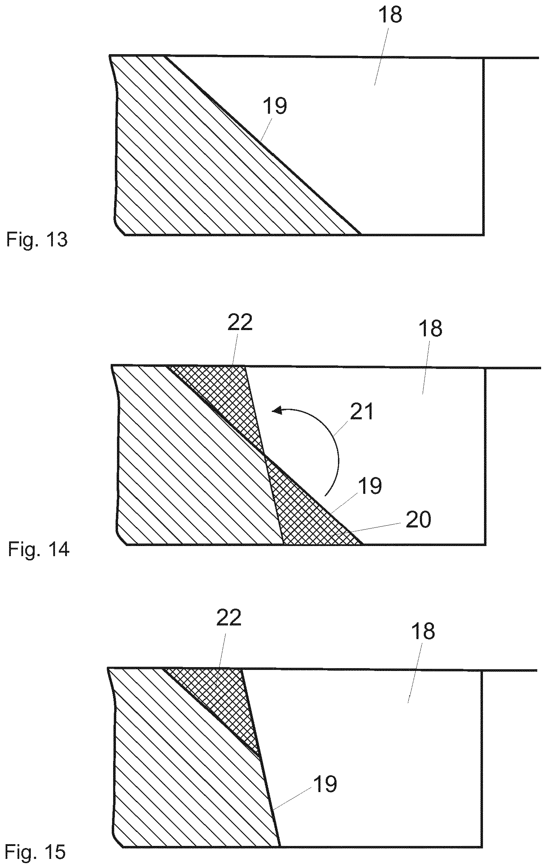

In Fig. 10 ist eine Furche 18 des zu bearbeitenden Erdbodens gezeigt, wobei die Furchenwand 19 einen diagonalen Verlauf hat. Dieser soll ein wenig begradigt werden, wie dies Fig. 11 zeigt, indem der durch Gitter gekennzeichnete Abschnitt darstellt, dass der untere Bereich 20 entsprechend der Pfeilrichtung 21 durch das Leitorgan und das Streichblech 11 in den oberen Bereich 22 überführt werden soll, wie dies in Fig. 12 dargestellt ist, woraus sich ergibt, dass die Furchenwand 19 weniger schräg verläuft mit der Konsequenz einer breiteren Furche 18. Eine analoge Darstellung ist in den Fig. 13, 14 und 15 dargestellt, bei der die aufgeschüttete Furchenwand 19 noch steiler dargestellt werden kann.

In den Fig. 16 und 17 ist ein erfindungsgemäßes Ausführungsbeispiel dargestellt, bei der das Leitorgan 10 mit Lageabstand zur Pflugschar 12 an dem Streichblech 11 wiederum über Schrauben 13 auswechselbar angeordnet ist. Hierbei geht jedoch in dem vorderen Bereich die untere Kante 17 auch wiederum stetig, d.h. ohne Stufe in die untere Kante 16 des Streichbleches über, wobei beide Leitorgane 10 nach Art einer Flosse gestaltet sind.

Hier liegt die untere Kante des Leitorgans 10 unterhalb des oberen Bereiches der Pflugschar 12. Jedoch überragt der Konturenverlauf des Leitorgans 10 in seiner Ausrichtung zur Furchensohle des zu bearbeitenden Erdbodens hin die Pflugschar 12 des Pflugkörpers 9 nicht um mehr als dreiviertel, vorzugweise die halbe Höhe der Pflugschar 12 und hat so noch einen beträchtlichen Abstand zur Furchensohle. Dieser beträgt somit zumindest ein Viertel, vorzugweise zumindest die halbe Höhe der Pflugschar 12.

## Patentansprüche

1. Pflug (1), insbesondere Drehpflug, mit einem an einem Anbaubock (2) zur Verbindung des Pfluges (1) mit einem landwirtschaftlichen Schlepper befestigbaren, vorzugsweise über ein Stützrad (4) auf dem Erdboden abstützbaren Pflugrahmen (3) mit zumindest einer an dem Pflugrahmen angeordneten Pflugscharreihe (7,8) die jeweils Pflugkörper (9) mit einer Pflugschar (12) und einem Streichblech (11) aufweist, mit welchem ein Furchenbalken des zu bearbeitenden Erdbodens einem dynamischem Wendevorgang zu unterziehen ist, und mit einem sich in Arbeitsrichtung des Pfluges (1) hinter der Pflugschar (12) angeordneten, dem unteren Bereich des Streichbleches zugeordneten, sich in Richtung einer Furchensohle des zubereitenden Erdbodens hin erstreckenden Leitorgan (10), **dadurch gekennzeichnet, dass** der Konturverlauf des Leitorgans (10) in seiner Ausrichtung zur Furchensohle des zu bearbeitenden Erdreiches hin die obere Kante der Pflugschar (12) eines Pflugkörpers um vorzugsweise nicht mehr als Dreiviertel der Höhe, vorzugsweise die halbe Höhe des Pflugschars (12) nach unten überragt und einen Bereich des Leitbleches (11) entgegen der Arbeitsrichtung des Pfluges hinter der Pflugschar (12) und zur Furchensohle des zu bearbeitenden Bodens hin fortsetzt, in welchem ein dynamischer Wendevorgang des Furchenbalkens des zu bearbeitenden Erdreiches erfolgt.

2. Pflug nach Anspruch 1, **dadurch gekennzeichnet, dass** das Leitorgan (10) in seinem vorderen in Arbeitsrichtung des Pfluges weisenden Bereich stufenlos in eine untere, der Furchensohle des zu bearbeitenden Erntebodens hin zugewandte Kante (16) des Streichbleches (11) übergeht.

3. Pflug nach einem der Ansprüche 1 bis 2, **dadurch gekennzeichnet, dass** sich das Leitorgan (10) unmittelbar an die Pflugschar (12) anschließt.

4. Pflug nach einem der Ansprüche 1 bis 3, **dadurch gekennzeichnet, dass** das Leitorgan (10) eine Trennlinie (14) zwischen dem Streichblech (11) und der Pflugschar (12) zur Furchensohle des zu bearbeitenden Erdbodens hin nicht mehr als dreiviertel der Höhe, vorzugsweise die halbe Höhe der Pflugschar nach unten überragt.

5. Pflug nach Anspruch 3, **dadurch gekennzeichnet, dass** das Leitorgan (10) mit seiner der Furchensohle des zu bearbeitenden Erntebodens hin zugewandten unteren Kante (17) die Trennlinie (14) zwischen dem Streichblech (11) und der Pflugschar (12) verlängert.

6. Pflug nach einem der Ansprüche 1 bis 4, **dadurch gekennzeichnet, dass** das Leitorgan (10) in seinem rückwärtigen Bereich stufenlos in eine in die der Furchensohle des zu bearbeitenden Erntebodens hin zugewandte untere Kante (16) des Streichbleches (11) übergeht.

7. Pflug nach einem der Ansprüche 1 bis 5, **dadurch gekennzeichnet, dass** das Leitorgan entgegen die Arbeitsrichtung des Pfluges (1) einen Abstand zu der Pflugschar (12) aufweist.

8. Pflug nach einem der Ansprüche 1 bis 6, **dadurch gekennzeichnet, dass** das Leitorgan (10) in das Streichblech (11) übergeht in einen Bereich, entgegen der Arbeitsrichtung des Pfluges (1) gesehen, der einen Abstand zum Ende des Streichbleches (11) aufweist, der kleiner ist als die Pflugscharlänge.

9. Pflug nach einem der Ansprüche 1 bis 8, **dadurch gekennzeichnet, dass** das Leitorgan (10) auswechselbar an dem Streichblech (11) gehaltert ist.

10. Pflug nach einem der Ansprüche 1 bis 9, **dadurch gekennzeichnet, dass** das Leitorgan (10) als Fortsetzung des Streichbleches ausgebildet ist.

11. Pflug nach einem der Ansprüche 1 bis 9, **dadurch gekennzeichnet, dass** nur der in Arbeitsrichtung des Pfluges (1) gesehene letzte Pflugkörper (9) mit dem Leitorgan (10) versehen ist, wohingegen die anderen diesem Pflugkörper (9) in Arbeitsrichtung vorgeordneten Pflugkörper (9) jeweils kein Leitorgan (10) aufweisen.

12. Pflug nach einem der Ansprüche 1 bis 9, **dadurch gekennzeichnet, dass** die untere Kante des Leitorgans zumindest in dessen hinteren Hälfte einen stetig nach hinten und oben ansteigenden Verlauf aufweist.

## Claims

1. Plough (1), in particular reversible plough, with a plough frame (3) which is fastenable to a headstock (2) for connecting the plough (1) to an agricultural tractor, is supportable on the ground preferably via a support wheel (4) and has at least one row of ploughshares (7, 8) arranged on the plough frame and each having a plough body (9) with a ploughshare (12) and a mouldboard (11), with which a furrow ridge of the ground to be cultivated can be subjected to a dynamic turning operation, and with a guiding member (10) which is arranged behind the ploughshare (12) in the working direction of the plough (1), is assigned to the lower region of the mouldboard and extends in the direction of a furrow base of the ground to be prepared, **characterized in that** the contour profile of the guiding member (10), in the orientation thereof with respect to the furrow base of the soil to be cultivated, projects downwards over the upper edge of the ploughshare (12) of a plough body by preferably not more than three quarters of the height, preferably half the height of the ploughshare (12) and continues a region of the guiding plate (11) counter to the working direction of the plough behind the ploughshare (12) and towards the furrow base of the ground to be cultivated, in which region a dynamic turning operation of the furrow ridge of the soil to be cultivated takes place.

2. Plough according to Claim 1, **characterized in that** the guiding member (10) merges steplessly in the front region thereof, which faces in the working direction of the plough, into a lower edge (16) of the mouldboard (11), which edge faces the furrow base of the harvesting ground to be cultivated.

3. Plough according to either of Claims 1 and 2, **characterized in that** the guiding member (10) directly adjoins the ploughshare (12).

4. Plough according to one of Claims 1 to 3, **characterized in that** the guiding member (10) projects downwards over a separating line (14) between the mouldboard (11) and the ploughshare (12) towards the furrow base of the ground to be cultivated by not more than three quarters of the height, preferably half the height of the ploughshare.

5. Plough according to Claim 3, **characterized in that** the guiding member (10), with the lower edge (17) thereof facing the furrow base of the harvesting ground to be cultivated, extends the separating line (14) between the mouldboard (11) and the ploughshare (12).

6. Plough according to one of Claims 1 to 4, **characterized in that** the guiding member (10) merges steplessly in the rear region thereof into a into the lower edge (16) of the mouldboard (11), which lower edge faces the furrow base of the harvesting ground to be cultivated.

7. Plough according to one of Claims 1 to 5, **characterized in that** the guiding member is at a distance from the plough share (12) counter to the working direction of the plough (1).

8. Plough according to one of Claims 1 to 6, **characterized in that** the guiding member (10) merges into the mouldboard (11) into a region, as seen counter to the working direction of the plough (1), which is at a distance from the end of the mouldboard (11), which distance is smaller than the ploughshare length.

9. Plough according to one of Claims 1 to 8, **characterized in that** the guiding member (10) is held exchangeably on the mouldboard (11).

10. Plough according to one of Claims 1 to 9, **characterized in that** the guiding member (10) is designed as a continuation of the mouldboard.

11. Plough according to one of Claims 1 to 9, **characterized in that** only the final plough body (9), as seen in the working direction of the plough (1), is provided with the guiding member (10), whereas the other plough bodies (9) arranged upstream of said plough body (9) in the working direction in each case have no guiding member (10).

12. Plough according to one of Claims 1 to 9, **characterized in that** the lower edge of the guiding member has, at least in the rear half thereof, a profile which rises continuously rearwards and upwards.

## Revendications

1. Charrue (1), en particulier charrue brabant, comprenant un cadre de charrue (3) pouvant être fixé à un attelage (2) pour le raccordement de la charrue (1) à un tracteur agricole, de préférence pouvant être supporté sur le sol par le biais d'une roue de support (4), comprenant au moins une rangée de socs (7, 8) disposée sur le cadre de charrue, qui présente à chaque fois des corps de charrue (9) avec un soc de charrue (12) et un versoir (11), avec lequel une bande de sillon du sol à travailler peut être soumise à une opération de retournement dynamique, et comprenant un organe conducteur (10) disposé dans la direction de travail de la charrue (1) derrière le soc de charrue (12), associé à la région inférieure du versoir, s'étendant dans la direction du fond de sillon du sol à préparer, **caractérisée en ce que** l'allure du contour de l'organe conducteur (10) dans son orientation vers le fond de sillon du sol à travailler ne dépasse pas de préférence de plus de trois quarts de la hauteur, de préférence de plus de la moitié de la hauteur du soc de charrue (12) vers le bas au-delà de l'arête supérieure du soc de charrue (12) d'un corps de charrue et prolonge une région de la plaque de guidage (11) à l'encontre du sens de travail de la charrue derrière le soc de charrue (12) et vers le fond de sillon du sol à travailler, dans lequel a lieu une opération de retournement dynamique de la bande de sillon de la terre à travailler.

2. Charrue selon la revendication 1, **caractérisée en ce que** l'organe conducteur (10), dans sa région avant tournée dans le sens de travail de la charrue, passe en continu dans une arête inférieure (16) du versoir (11), tournée vers le fond de sillon du sol de récolte à travailler.

3. Charrue selon l'une quelconque des revendications 1 à 2, **caractérisée en ce que** l'organe conducteur (10) se raccorde directement au socle de charrue (12).

4. Charrue selon l'une quelconque des revendications 1 à 3, **caractérisée en ce que** l'organe conducteur (10) ne dépasse pas de plus de trois quarts de la hauteur, de préférence de la moitié de la hauteur du soc de charrue vers le bas au-delà d'une ligne de séparation (14) entre le versoir (11) et le soc de charrue (12) vers le fond de sillon du sol à travailler.

5. Charrue selon la revendication 3, **caractérisée en ce que** l'organe conducteur (10), avec son arête inférieure (17) tournée vers le fond de sillon du sol à travailler, prolonge la ligne de séparation (14) entre le versoir (11) et le soc de charrue (12).

6. Charrue selon l'une quelconque des revendications 1 à 4, **caractérisée en ce que** l'organe conducteur (10), dans sa région arrière, se prolonge en continu dans une dans l'arête inférieure (16) du versoir (11) tournée vers le fond de sillon du sol à travailler.

7. Charrue selon l'une quelconque des revendications 1 à 5, **caractérisée en ce que** l'organe conducteur présente dans le sens opposé au sens de travail de la charrue (1), un espacement par rapport au soc de charrue (12).

8. Charrue selon l'une quelconque des revendications 1 à 6, **caractérisée en ce que** l'organe conducteur (10) se prolonge dans le versoir (11) dans une région, vue dans le sens opposé au sens de travail de la charrue (1), qui présente une distance à l'extrémité du versoir (11) qui est inférieure à la longueur du soc de charrue.

9. Charrue selon l'une quelconque des revendications 1 à 8, **caractérisée en ce que** l'organe directeur (10) est fixé de manière remplaçable sur le versoir (11).

10. Charrue selon l'une quelconque des revendications 1 à 9, **caractérisée en ce que** l'organe directeur (10) est réalisé sous forme de prolongement du versoir.

11. Charrue selon l'une quelconque des revendications 1 à 9, **caractérisée en ce que** seulement le dernier corps de charrue (9), vu dans le sens de travail de la charrue (1), est pourvu de l'organe conducteur (10), tandis que les autres corps de charrue (9) placés avant ce corps de charrue (9) dans le sens de travail ne présentent aucun organe conducteur (10).

12. Charrue selon l'une quelconque des revendications 1 à 9, **caractérisée en ce que** l'arête inférieure de l'organe conducteur présente au moins dans sa moitié arrière une allure montant de manière constante vers l'arrière et vers le haut.
